Europäisches Patentamt

European Patent Office

Office européen des brevets

(19)

(11) Numéro de publication : **0 277 882 B1**

(12)

# FASCICULE DE BREVET EUROPEEN

(45) Date de publication du fascicule du brevet :
04.09.91 Bulletin 91/36

(51) Int. Cl.⁵ : **A23B 4/02, A22C 5/00**

(21) Numéro de dépôt : **88400242.9**

(22) Date de dépôt : **02.02.88**

(54) Appareil de saumurage de viande par malaxage sous-vide.

(30) Priorité : 05.02.87 FR 8701410

(43) Date de publication de la demande :
10.08.88 Bulletin 88/32

(45) Mention de la délivrance du brevet :
04.09.91 Bulletin 91/36

(84) Etats contractants désignés :
AT BE CH DE ES GB GR IT LI LU NL SE

(56) Documents cités :
DE-A- 2 156 308
FR-A- 2 357 182
FR-A- 2 460 113
GB-A- 2 085 742

(73) Titulaire : JAEGER PARTICIPATIONS S.A.
9 Rue du Colonel Driant
F-95400 Arnouville-les-Gonesse (FR)

(72) Inventeur : Thirode, Pierre Henri
80 Boulevard Bourdon
F-92200 Neuilly-Sur-Seine (FR)

(74) Mandataire : Leszczynski, André
Cabinet Dupuy & Loyer 14, rue La Fayette
F-75009 Paris (FR)

## Description

La présente invention est relative à un appareil de saumurage de viande par malaxage sous-vide.

L'appareil selon l'invention est du type général de celui décrit dans le brevet français 7533343 et comporte une cuve sensiblement cylindrique sur au moins la majeure partie de sa longueur apte à être mise en rotation dans l'un et l'autre sens autour de son axe longitudinal par des moyens d'entraînement, ladite cuve étant pourvue à l'une de ses extrémités d'une ouverture de chargement/déchargement apte à être obturée par un couvercle au travers duquel s'effectuent la mise sous-vide et le cas échéant l'injection de saumure lorsque la viande n'a pas été traitée au préalable par injection de saumure.

Dans le brevet antérieur, des moyens sont prévus pour incliner par rapport à l'horizontale l'axe longitudinal de la cuve, ces moyens étant agencés pour modifier l'inclinaison d'un bâti de support de la cuve par rapport à la surface sur laquelle il est posé.

Il est en effet souhaitable, notamment pour accroître la capacité de chargement de l'appareil, d'incliner celui-ci de manière que la partie arrière de la cuve se trouve plus basse que la partie avant munie de l'ouverture de chargement/déchargement.

Il est ainsi souhaitable de pouvoir réaliser en charge complète de l'appareil un angle d'inclinaison de la cuve par rapport à l'horizontale pouvant aller jusqu'à 40°.

Cette forte inclinaison, favorable au chargement, se révèle par contre tout à fait inappropriée pour permettre un déchargement complet de la viande hors de l'appareil après l'opération de saumurage/malaxage.

En effet, dans ce type d'appareil, l'extraction de la viande traitée s'effectue au travers de l'ouverture de la cuve par simple rotation de celle-ci dans le sens opposé à son sens de rotation pendant l'opération de malaxage, cette extraction étant favorisée par des tôles de guidage fixées à la paroi interne de la cuve.

On constate qu'avec un angle d'inclinaison de la cuve de l'ordre de grandeur de celui mentionné ci-dessus, une quantité importante de viande ne sort pas automatiquement de la cuve, nécessitant une intervention du personnel de service.

La présente invention se propose de réaliser un appareil évitant notamment ce type d'inconvénient et offrant en outre une qualité et une fiabilité de fonctionnement accrues.

L'appareil selon l'invention se caractérise par le fait qu'il comprend, au voisinage du bord arrière du bâti de support de la cuve au moins un organe élastique, interposé entre ledit bâti et la surface de support de l'appareil, et agencé de manière à être progressivement comprimé depuis une position de repos correspondant à l'état vide de la cuve dans lequel l'axe longitudinal de celle-ci fait de préférence un angle inférieur à environ 5° avec l'horizontale jusqu'à une position de charge dans laquelle l'axe longitudinal de la cuve fait avec l'horizontale un angle compris entre 10 et 40° et de préférence entre 10 et 20°, le ou lesdits organes élastiques revenant progressivement à leur position de repos lors du déchargement de la cuve.

Dans un mode avantageux de réalisation, les organes élastiques sont constitués par des ressorts hélicoïdaux de compression, de préférence au nombre de deux, espacés de part et d'autre de l'axe longitudinal de la cuve et interposés entre un flasque en déport vers le haut du bâti de support au voisinage de son extrémité arrière et la surface de réception dudit bâti, ledit flasque s'étendant sensiblement au niveau d'un palier arrière de montage de l'axe de rotation de la cuve.

Un tel montage élastique de la cuve et de son bâti de support offre l'avantage supplémentaire d'assurer un amortissement des chocs provoqués par le déplacement des morceaux de viande contre la paroi intérieure de la cuve lors de chaque rotation de celle-ci, garantissant une moindre usure du palier et des moyens d'entraînement et donc une plus grande fiabilité de fonctionnement.

Grâce aux caractéristiques de la présente invention, on obtient de manière automatique une adaptation de l'inclinaison de la cuve en fonction de la charge de viande introduite, permettant un fonctionnement d'ensemble optimisé et ce aussi bien lors des phases de chargement, de malaxage sous-vide et de déchargement, chacune des phases prise individuellement étant également optimisée.

Dans le but de mieux faire comprendre l'invention, on va maintenant décrire à titre d'exemple un mode de réalisation en se référant au dessin annexé dans lequel :

— la figure 1 est une vue en élévation schématique d'un appareil selon l'invention en position de repos avec cuve vide ;

— la figure 2 est une vue également en élévation schématique de l'appareil selon l'invention en position de fonctionnement, la cuve étant chargée.

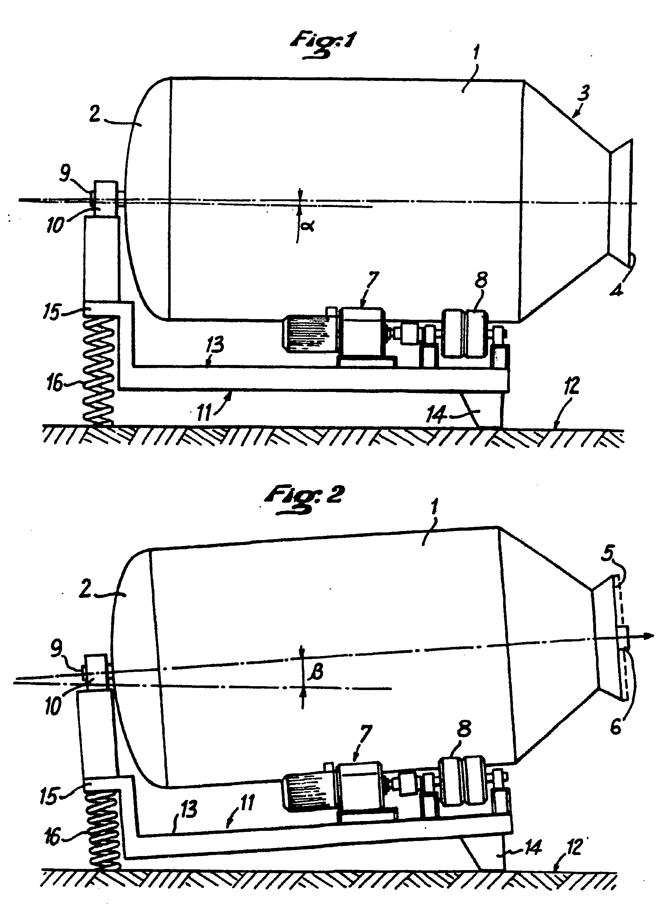

L'appareil selon l'invention est du type général décrit dans le brevet français 7533343 et comprend une cuve 1 cylindrique sur la majeure partie de sa longueur, terminée à sa partie arrière par un fond bombé 2 et à sa partie avant par une zone de chargement et déchargement de forme biconique 3 dont l'ouverture d'extrémité 4 est susceptible d'être fermée par une porte schématisée en 5 sur la figure 2. La porte 5, qui peut être de la structure de celle décrite dans le brevet français 7533343, comporte un joint tournant schématisé en 6 au travers duquel s'effectuent la mise sous-vide de la cuve et l'admission de saumure, comme cela est expliqué dans le document antérieur, la flèche illustrée à la figure 2 schématisant la liaison au circuit non représenté prévu à cet effet.

La cuve 1 est susceptible d'être entraînée en rotation autour de son axe longitudinal par un ensemble d'entraînement comportant un groupe moto-réducteur 7 apte à entraîner dans l'un et l'autre sens à volonté des roues d'entraînement à friction 8 en contact avec la paroi extérieure cylindrique de la cuve. La cuve comporte également à son extrémité arrière un arbre 9 tourillonné dans un palier 10 monté à la partie arrière d'un bâti 11 supportant la cuve et permettant le montage de celle-ci sur une surface de réception 12.

Plus spécifiquement, le bâti 11 comporte essentiellement une portée principale 13 d'une longueur correspondant sensiblement à la longueur de la partie cylindrique de la cuve et portant le groupe motoréducteur 7 et les roues d'entraînement 8. La portée 13 comporte également à sa partie avant des pieds d'appui 14 et se prolonge à sa partie arrière par un flasque 15 en déport vers le haut et à l'aplomb duquel se trouve le palier 10 de support de l'axe de la cuve.

Selon l'invention, l'on dispose entre le bâti de support 11 et la surface de réception 12, et, plus précisément dans le mode de réalisation représenté, entre le flasque 15 et la surface de support 12, des ressorts de compression 16, par exemple au nombre de deux.

Ces ressorts 16 sont dimensionnés de manière que dans leur position de repos, illustrée à la figure 1, l'axe longitudinal de la cuve soit sensiblement horizontal ou soit légèrement incliné par rapport à l'horizontale, par exemple d'un angle $\alpha$ de 5°.

Au fur et à mesure du remplissage de la cuve en morceaux de viande, puis en saumure, la cuve 1 s'incline vers l'arrière en comprimant les ressorts 16 jusqu'à une position de chargement maximum illustrée à la figure 2 où les ressorts 16 sont totalement comprimés et la cuve fait avec l'horizontale un angle $\beta$ de 15°.

Lorsqu'à partir de cette position on procède au déchargement de la viande saumurée hors de la cuve, par rotation de celle-ci en sens inverse du sens de rotation pendant le malaxage sous-vide, les ressorts 16 se détendent progressivement, au fur et à mesure que le poids de la cuve chargée diminue, jusqu'à revenir à la position de la figure 1 où la totalité de la viande saumurée est facilement déchargée de manière automatique et sans aucune intervention extérieure.

Bien que l'on ait illustré sur le dessin des ressorts hélicoïdaux de compression, on peut envisager selon l'invention d'autres types d'organes élastiques assurant des propriétés de compression sous charge puis de détente comparables, par exemple des ensembles de blocs en élastomère ou analogue.

## Revendications

1. Appareil de saumurage de viande par malaxage sous-vide comportant une cuve (1) sensiblement cylindrique sur au moins la majeure partie de sa longueur, apte à être mise en rotation dans l'un et l'autre sens autour de son axe longitudinal par des moyens d'entraînement (7, 8), ladite cuve étant pourvue à l'une de ses extrémités d'une ouverture (4) de chargement/déchargement apte à être obturée par un couvercle (5) au travers duquel s'effectuent la mise sous-vide et le cas échéant l'injection de saumure, la cuve étant montée sur un bâti de support (11) et des moyens étant prévus pour modifier l'inclinaison dudit bâti par rapport à la surface sur laquelle il est posé de manière à incliner par rapport à l'horizontale l'axe longitudinal de la cuve, caractérisé par le fait que lesdits moyens comprennent, au voisinage du bord arrière du bâti (11) de support de la cuve, au moins un organe élastique (16) interposé entre ledit bâti (11) et la surface de support de l'appareil (12) et agencé de manière à être progressivement comprimé depuis une position de repos correspondant à l'état vide de la cuve jusqu'à une position de charge, le ou lesdits organes élastiques revenant progressivement à leur position de repos lors du déchargement de la cuve.

2. Appareil selon la revendication 1, caractérisé par le fait que le ou les organes élastiques (16) sont agencés de manière que l'axe longitudinal de la cuve fasse un angle inférieur à environ 5° avec l'horizontale à l'état vide de la cuve et un angle compris entre 10° et 40° lorsque la cuve est chargée.

3. Appareil selon l'une quelconque des revendications 1 et 2, caractérisé par le fait que le ou les organes élastiques sont constitués par des ressorts hélicoïdaux de compression (16), de préférence au nombre de deux, espacés de part de d'autre de l'axe longitudinal de la cuve.

4. Appareil selon la revendication 3, caractérisé par le fait que les ressorts sont interposés entre un flasque (15) en déport vers le haut du bâti de support (11) au voisinage de son extrémité arrière et la surface de réception (12) dudit bâti, ledit flasque s'étendant sensiblement au niveau d'un palier arrière (10) de montage de l'axe de rotation (9) de la cuve.

## Patentansprüche

1. Vorrichtung zum Pökeln von Fleisch durch Massieren unter Vakuum, mit einem Trog (1), der zumindest auf dem größten Teil seiner Länge im wesentlichen zylindrisch ist und durch Antriebsmittel (7, 8) im einen oder anderen Drehsinn um seine Längsachse drehbar ist und der an einem Ende mit einer Lade/Entlade-Öffnung (4) versehen ist, die durch einen Deckel (5) verschließbar ist, durch den hindurch die Evakuierung und ggf. die Zugabe von Lake erfolgt, wobei der Trog auf einem Traggestell (11) montiert ist und Mittel zur Änderung der Neigung des Traggestells in Bezug auf seine Standfläche vorgesehen sind, so daß die Längsachse des Troges in Bezug auf die Horizontale geneigt werden kann, dadurch **gekennzeichnet,** daß die genannten Mittel in der Nähe des hinteren Randes des Traggestells (11) für den Trog wenigstens ein elastisches Organ (16) aufweisen, das zwischen dem Traggestell (11) und der Standfläche (12) der Vorrichtung eingefügt und so angeordnet ist, daß es aus einer dem leeren Zustand des Troges entsprechenden Ruhestellung progressiv bis in eine Beladungsstellung komprimierbar ist, wobei das oder die elastischen Organe bei der Entladung des Troges progressiv in ihre Ruhestellung zurückkehren.

2. Vorrichtung nach Anspruch 1, dadurch **gekennzeichnet,** daß das oder die elastischen Organe (16) so angeordnet sind, daß die Längsachse des Troges mit der Horizontalen im leeren Zustand des Troges einen Winkel von weniger als etwa 5° und im beladenen Zustand einen Winkel zwischen 10° und 40° bildet.

3. Vorrichtung nach Anspruch 1 oder 2, dadurch **gekennzeichnet,** daß das oder die elastischen Organe durch — vorzugsweise zwei — Schraubendruckfedern (16) gebildet werden, die in Abstand beiderseits der Längsachse des Troges angeordnet sind.

4. Vorrichtung nach Anspruch 3, dadurch **gekennzeichnet,** daß die Federn zwischen einem nach oben versetzten Flansch (15) des Traggestells (11) in der Nähe seines hinteren Endes und der Standfläche (12) des Traggestells eingefügt sind, wobei der Flansch sich im wesentlichen in Höhe eines hinteren Lagers (10) für die Drehachse (9) des Troges erstreckt.

## Claims

1. Device for brining meat by kneading under vacuum, comprising a vessel (1) which is substantially cylindrical over at least the greater portion of its length and which is capable of being rotated in either direction about its longitudinal axis by drive means (7, 8), the said vessel being provided at one of its ends with a loading/unloading opening (4) capable of being closed by a cover (5) through which the placing under vacuum and the injection of brine, if appropriate, are effected, the vessel being mounted on a support frame (11) and means being provided for adjusting the tilt of the said frame relative to the surface on which it is placed so as to tilt the longitudinal axis of the vessel relative to the horizontal, characterised in that the said means comprise, in the vicinity of the rear edge of the frame (11) for supporting the vessel, at least one elastic member (16) inserted between the said frame (11) and the surface for supporting the apparatus (12) and arranged so that it is gradually compressed from a rest position corresponding to the empty state of the vessel to a load position, the said elastic member or members gradually returning to their rest position when the vessel is unloaded.

2. Device according to Claim 1, characterised in that the elastic member or members (16) is (are) arranged so that the longitudinal axis of the vessel forms an angle of less than approximately 5° with the horizontal in the empty state of the vessel and an angle of between 10° and 40° when the vessel is loaded.

3. Device according to either one of Claims 1 and 2, characterised in that the elastic member or members consist(s) of helical compression springs (16), preferably two in number, spaced on either side of the longitudinal axis of the vessel.

4. Device according to Claim 3, characterised in that the springs are inserted between a flange (15) offset towards the top of the support frame (11) in the vicinity of its rear end and the reception surface (12) of the said frame, the said flange extending substantially at the level of a rear bearing (10) for mounting the rotation shaft (9) of the vessel.

*Fig.1*

*Fig.2*